# EUROPÄISCHE PATENTANMELDUNG

(11) **EP 0 697 664 A1**
(43) Veröffentlichungstag der Anmeldung: **21.02.1996**
(21) Anmeldenummer: 94111994.3
(22) Anmeldetag: 01.08.1994
(51) Int. Cl.: G06F 13/42, H04L 12/40

(54) **System zur bidirektionalen Datenübertragung**

(71) Anmelder: SIEMENS AKTIENGESELLSCHAFT, D-80333 München (DE)
(72) Erfinder: Brune, Richard, D-90765 Fürth (DE); Rochholz, Günter, D-91074 Herzogenaurach (DE); Schumacher, Jürgen, D-90768 Fürth (DE)

(57) **Zusammenfassung**

Es wird eine bidirektionale Datenübertragung zwischen einer Masterstation (M) und mindestens einer Slavestation (S1,S2) angegeben, die mit einem einfachen Bussystem (B) und einer einzigen Taktleitung (T) ausgestattet ist. Der Fluß von Steuerbytes (ST1,ST2), Adreßbytes (A1,A2), Datenbytes (D1,D2, D3,D4) und Sicherungsbytes (SI1,SI2) erfolgt taktgesteuert. Bei Schreibvorgängen der Masterstation (M) bestimmt diese fortlaufend den Takt, bei Lesevorgängen der Masterstation (M) wird der Takt zunächst von der Masterstation (M) und dann ablösend von der jeweiligen Slavestation (S1,S2) gesteuert.

## Beschreibung

Die Erfindung bezieht sich auf ein System zur bidirektionalen Datenübertragung zwischen einer Masterstation und mindestens einer Slavestation, wobei alle Stationen über einen Bus miteinander in Verbindung stehen.

Systeme dieser Art sind seit langem handelsüblich. Typisch ist es dabei, daß die Masterstation alle Übertragungen anstößt. Für die eigentliche Datenübertragung bieten sich dabei Bussysteme an, die aus Datenbus, Adreßbus und Steuerbus gebildet sein können. Die Vielzahl dieser Busübertragungen bedingt dabei einer relativ großen Leitungszahl, worin ein erheblicher Nachteil derartiger Übertragungen liegt.

Aufgabe der Erfindung ist es, mit geringer Leitungszahl ein System der eingangs genannten Art zu realisieren.

Diese Aufgabe wird für den Schreibverkehr gemäß der Erfindung dadurch gelöst, daß eine Taktleitung zwischen den Stationen angeordnet ist, daß für einen Schreibvorgang, bei dem Informationen von der Masterstation zu einer der Slavestationen gesendet werden, die folgenden Schritte erfolgen:
a) die Masterstation legt ein Steuerbyte an den Bus, das den Schreibwunsch, eine Formatkennung und die Adresse der zu beschreibenden Slavestation angibt,
b) die Masterstation gibt durch ein erstes Taktsignal das Steuerbyte frei,
c) die Masterstation legt ein jeweiliges Adreßbyte an den Bus,
d) die Masterstation gibt durch ein zweites Taktsignal das Steuerbyte frei,
e) die Masterstation gibt nacheinander soviele Datenbytes an den Bus, wie in der Formatkennung angegeben sind,
f) die Masterstation gibt durch weitere Taktsignale jeweils die Datenbytes frei.
   Zur Datensicherung erweist es sich in diesem Zusammenhang als günstig, daß ferner folgende Schritte ausgelöst werden:
g) die Masterstation legt ein jeweiliges Sicherungsbyte an den Bus,
h) die Masterstation gibt durch ein weiteres Taktsignal das Sicherungsbyte frei.
   Für den Leseverkehr wird diese Aufgabe dadurch gelöst, daß für den Bus ein n-Bit Parallelbus vorgesehen ist, daß eine Taktleitung zwischen den Stationen angeordnet ist, daß für einen Lesevorgang, bei dem Informationen von einer Slavestation zur Masterstation gesendet werden, die folgenden Schritte erfolgen:
i) die Masterstation legt ein Steuerbyte an den Bus, das den Lesewunsch, eine Formatkennung und die Adresse der schreibenden Slavestation angibt,
j) die Masterstation gibt durch ein erstes Taktsignal das Steuerbyte frei,
k) die Masterstation legt ein jeweiliges Adreßbyte an den Bus,
l) die Masterstation gibt durch ein zweites Taktsignal das Adreßbyte frei,
m) die sendende Slavestation gibt nacheinander soviele Datenbytes an den Bus, wie in der Formatkennung angegeben sind,
n) die sendende Slavestation gibt durch weitere Taktsignale jeweils die Datenbytes frei.
   Auch in diesem Zusammenhang kann eine Datensicherung sehr leicht dadurch realisiert werden, daß folgende Schritte ausgelöst werden:
o) die sendende Slavestation legt ein jeweiliges Sicherungsbyte an den Bus,
p) die sendende Slavestation gibt durch ein weiteres Taktsignal das Sicherungsbyte frei.

Eine vorteilhafte Ausbildung dieser Systeme ist dadurch gekennzeichnet, daß als Taktsignale Polaritätswechsel dienen, da derartige Signalwechsel relativ leicht ausgewertet werden können.

Ferner erweist es sich als vorteilhafte, daß die jeweilige Bytefreigabe jeweils nach Ablauf einer Stabilisierungsphase erfolgt, wodurch ein äußerst sicherer Betrieb gewährleistet ist.

Dadurch, daß für die Masterstation und die Slavestation jeweils spezifische Zeitraster für die Taktsignale vorgesehen sind, können unterschiedlich potente Master- und Slavestationen miteinander kommunizieren.

Eine weitere vorteilhafte Ausbildung der Erfindung ist dadurch gekennzeichnet, daß die Taktsignale der Slavestationen dadurch ausgelöst werden, daß dort ein von der Masterstation generiertes resistives high-Signal getaktet wird. Eine derartige Ausbildung des Taktes ist zum einen technisch äußerst einfach realisierbar, zum andern erweist es sich als günstig, daß beim Lesevorgang sowohl die zu übertragende Information als auch der Takt von der diesbezüglichen Datenquelle generiert werden. Dadurch können Laufzeitprobleme, die dann entstehen würden, wenn der Takt auch in diesen Fall stets von der Masterstation ausgelöst würde, von vornherein ausgeschaltet werden.

Dadurch, daß am Ende eines Schreibvorgangs jeweils ein Pausensignal spezifischer Dauer auf der Taktleitung, insbesondre für Synchronisierzwecke ausgelöst wird, kann eine weitere Information entsprechend der Pausendauer übertragen werden, insbesondere kann damit ein durch Störungen "außer Tritt" geratener Bus leicht wieder synchronisiert werden.

Ein Ausführungsbeispiel der Erfindung ist in der Zeichnung dargestellt und wird im folgenden näher erläutert. Dabei zeigen:
- FIG 1: ein Blockschaltbild,
- FIG 2: den prinzipiellen Ablauf eines Schreibvorganges und
- FIG 3: den prinzipiellen Ablauf eines Lesevorganges.

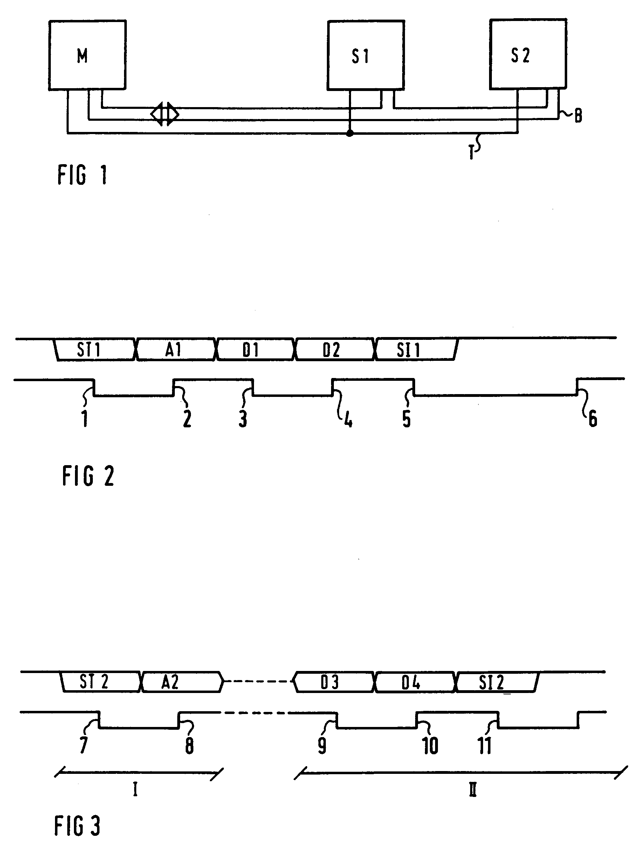

In der Darstellung gemäß FIG 1 ist gezeigt, wie eine Masterstation M über einen n-Bit breiten Parallelbus, wobei n = 8 sein kann, mit zwei Slavestationen S1 und S2 verbunden ist. Ferner ist zwischen der Masterstation M und den Slavestationen S1 und S2 eine Taktleitung T vorgesehen.

In der Darstellung gemäß FIG 2 ist der Ablauf eines Schreibvorganges gezeigt, bei dem Informationen von der Masterstation M beispielsweise an die Slavestation S1 übertragen werden. Die Masterstation M legt dazu zunächst an Steuerbyte ST1 auf den Parallelbus, wobei dieses Steuerbyte durch eine negative Taktflanke 1 auf der Taktleitung zur Übertragung freigegeben wird. Dieses Steuerbyte ST1 beinhaltet den Schreibwunsch, eine Formatkennung und die Adresse der zu beschreibenden Slavestation. Mit einer auf der Taktleitung folgenden positiven Taktflanke 2 wird nun ein Adreßbyte A1 freigegeben, das von der Masterstation M auf den Parallelbus gelegt worden ist. Im folgenden wird durch eine negative Taktflanke 3 ein erstes Datenbyte und durch eine positive Taktflanke 4 und ein zweites Datenbyte D2 über den Parallelbus ausgelöst, bis dann mit einer negativen Taktflanke 5 ein Sicherungsbyte SI1 ausgelöst wird. Durch eine positive Signalflanke 6 kann der Eingangszustand vor Beginn des Schreibvorganges auf der Taktleitung wieder hergestellt werden. Die Zeitspanne zwischen der negativen Signalflanke 5 und der positiven Signalflanke 6 kann beispielsweise dazu genutzt werden, um einen "außer Tritt" geratenen Bus wieder zu synchronisieren. An dieser Stelle sei noch darauf hingewiesen, daß durch die Formatkennung der jeweiligen Slavestation mitgeteilt wird, wieviele Datenbytes überhaupt im jeweils aktuellen Schreibvorgang ausgelöst werden sollen.

Ein Ausführungsbeispiel für einen Lesevorgang ist in der Darstellung gemäß FIG 3 dargestellt. Bei einem Lesevorgang wird von der Masterstation Information von einer Slavestation abgefragt. Dazu wird zunächst in einem ersten Teilabschnitt I des Lesevorganges von der Masterstation durch eine negative Signalflanke 7 zunächst ein Steuerbyte ST2 auf den Bus gelegt, in dem der Lesewunsch signalisiert wird, die Adresse der schreibenden Slavestation angegeben wird und ebenfalls eine Formatkennung angegeben wird, die die Anzahl der informationsrelevanten Bytes angibt.

Mit einer positiven Signalflanke 8 wird dann von der Masterstation ein Adreßbyte ausgelöst, woraufhin der Teilabschnitt I beendet ist und auf der Taktleitung ein Signal resistiv "1" ausgelöst wird und wobei der Bus in den Zustand "hochohmig", um Informationen von der angesprochenen Slavestation aufnehmen zu können.

Wenn nun die Slavestation, beispielsweise die Slavestation S1, nunmehr die Quelle der Information ist, löst die Slavestation eine negative Flanke 9 durch Herabziehen des Signalpegels aus, die die Aussendung eines Datenbytes D3 bewirkt, das nunmehr an die Masterstation M gesendet wird. Mit einer positiven Signalflanke 10 auf der Taktleitung wird dann ein Datenbyte D4 ausgelöst und mit einer negativen Taktflanke wird ein Sicherungsbyte SI2 an die Masterstation freigegeben. Der Teilabschnitt der Datenübertragung der dabei unter der Autorität der Slavestation steht, ist in der Darstellung mit II angedeutet. Nach Absenden der Datenbytes D3 und D4 des Sicherungsbytes SI2 kann die Slavestation wieder auf "Input" schalten und auf den Beginn einer neuen Übertragung warten.

## Patentansprüche

1. System zur bidirektionalen Datenübertragung zwischen einer Masterstation (M) und mindestens einer Slavestation (S1,S2), wobei alle Stationen (M,S1,S2) über einen Bus (B) miteinander in Verbindung stehen, **dadurch gekennzeichnet,** daß für den Bus ein n-Bit Parallelbus (B) vorgesehen ist, daß eine Taktleitung (T) zwischen den Stationen (M,S1,S2) angeordnet ist, daß für einen Schreibvorgang, bei dem Informationen von der Masterstation (M) zu einer der Slavestationen (S1,S2) gesendet werden, die folgenden Schritte erfolgen:
a) die Masterstation (M) legt ein Steuerbyte (ST1) an den Bus (B), das den Schreibwunsch, eine Formatkennung und die Adresse der zu beschreibenden Slavestation (S1, S2) angibt,
b) die Mastestation (M) gibt durch ein erstes Taktsignal (1) das Steuerbyte (ST1) frei,
c) die Masterstation (M) legt ein jeweiliges Adreßbyte (A1) an den Bus (B),
d) die Masterstation (M) gibt durch ein zweites Taktsignal (2) das Steuerbyte (ST1) frei,
e) die Masterstation (M) gibt nacheinander soviele Datenbytes (D1,D2) an den Bus (B), wie in der Formatkennung angegeben sind,
f) die Masterstation (M) gibt durch weitere Taktsignale (3,4) jeweils die Datenbytes (D1,D2) frei.

2. System nach Anspruch 1, **dadurch gekennzeichnet,** daß folgende Schritte ausgelöst werden:
g) die Masterstation (M) legt ein jeweiliges Sicherungsbyte (SI1) an den Bus (B),
h) die Masterstation (M) gibt durch ein weiteres Taktsignal (5) das Sicherungsbyte (SI1) frei.

3. System zur bidirektionalen Datenübertragung zwischen einer Masterstation (M) und mindestens einer Slavestation (S1,S2), wobei alle Stationen (M,S1,S2) über einen Bus (B) miteinander in Verbindung stehen, **dadurch gekennzeichnet,** daß für den Bus ein n-Bit Parallelbus (B) vorgesehen ist, daß eine Taktleitung (T) zwischen den Stationen (M,S1,S2) angeordnet ist, daß für einen Lesevorgang, bei dem Informationen von einer Slavestation (S1 S2) zur Masterstation (M) gesendet werden, die folgenden Schritte erfolgen:
i) die Masterstation (M) legt ein Steuerbyte (ST2) an den Bus (B), das den Lesewunsch, eine Formatkennung und die Adresse der schreibenden Slavestation (S1,S2) angibt,
j) die Mastestation (M) gibt durch ein erstes Taktsignal (7) das Steuerbyte (ST2) frei,
k) die Masterstation (M) legt ein jeweiliges Adreßbyte (A2) an den Bus (B),
l) die Masterstation (M) gibt durch ein zweites Taktsignal (8) das Adreßbyte (A2) frei,
m) die sendende Slavestation (S1,S2) gibt nacheinander soviele Datenbytes (D3,D4) an den Bus (B), wie in der Formatkennung angegeben sind,
n) die sendende Slavestation (S1,S2) gibt durch weitere Taktsignale (9,10) jeweils die Datenbytes (D3,D4) frei.

4. System nach Anspruch 3, **dadurch gekennzeichnet,** daß folgende Schritte ausgelöst werden:
o) die sendende Slavestation (S1,S2) legt ein jeweiliges Sicherungsbyte (SI2) an den Bus (B),
p) die sendende Slavestation (S1,S2) gibt durch ein weiteres Taktsignal (11) das Sicherungsbyte (SI2) frei.

5. System nach einem der vorstehenden Ansprüche, **dadurch gekennzeichnet,** daß als Taktsignale (1-11) Polaritätswechsel dienen.

6. System nach einem der vorstenden Ansprüche, **dadurch gekennzeichnet,** daß die jeweilige Bytefreigabe jeweils nach Ablauf einer Stabilisierungsphase erfolgt.

7. System nach einem der vorstehenden Ansprüche, **dadurch gekennzeichnet,** daß für die Masterstation (M) und die Slavestationen (S1,S2) jeweils spezifische Zeitraster für die Taktsignale (1-11) vorgesehen sind.

8. System nach einem der vorstehenden Ansprüche, **dadurch gekennzeichnet,** daß die Taktsignale (7-11) der Slavestationen (S1,S2) dadurch ausgelöst werden, daß dort ein von der Masterstation (M) generiertes resistives high-Signal getaktet wird.

9. System nach einem der vorstehenden Ansprüche, **dadurch gekennzeichnet,** daß am Ende eines Schreibvorgangs jeweils ein Pausensignal spezifischer Dauer auf der Taktleitung (T), insbesondere für Synchronisierzwecke, ausgelöst wird.
